# EUROPEAN PATENT SPECIFICATION

(11) **EP 1 376 418 B1**
(45) Date of publication and mention of the grant of the patent: **27.12.2006**
(21) Application number: 01105538.1
(22) Date of filing: 06.03.2001
(51) Int. Cl.: G10L 15/28, G06Q 30/00

(54) **Service mediating apparatus**
Vorrichtung für die Dienstleistungsvermittlung
Dispositif pour la médiation de services

(30) Priority: 31.08.2000 JP 2000268371
(43) Date of publication of application: 02.01.2004
(73) Proprietor: Hitachi, Ltd., Chiyoda-ku, Tokyo 101-8010 (JP)
(72) Inventor: Niie, Manabu, Hitachi, Ltd., Intell., Prop.,Group, Tokyo 100-8220 (JP); Shioya, Makoto, Hitachi,Ltd., Intell., Prop.,Group, Tokyo 100-8220 (JP); Ukai, Seiji, Hitachi,Ltd., Intell., Prop.,Group, Tokyo 100-8220 (JP); Kujirai, Toshihiro Hitachi,Ltd., Int.,Prop.,Group, Tokyo 100-8220 (JP); Nejime, Yoshito, Hitachi,Ltd., Int.,Prop.,Group, Tokyo 100-8220 (JP); Kamiwaki, Tadashi, Hitachi,Ltd., Int.,Prop.,Group, Tokyo 100-8220 (JP); Sasaki, Toshiichirou, Hitachi,Ltd., Int.,Prop.,Gr., Tokyo 100-8220 (JP); Koga, Naoyuki, Hitachi,Ltd., Intell.,Prop.,Group., Tokyo 100-8220 (JP)
(74) Representative: Strehl Schübel-Hopf & Partner

(56) References cited:
- EP-A- 0 859 500
- WO-A-00/20962
- WO-A1-00/05643

## Description

### Background of the Invention

The present invention relates to a technique for mediating provision of information, service, etc. through a network. More particularly, the present invention relates to a mediation process employed in a case in which the format of input data (such as voice or image) from a client apparatus (service requesting apparatus) is different from that directly used by the server apparatus (service providing apparatus) to process information for providing service. It should be noted that a client apparatus according to the present invention can be mounted on a vehicle.

Japanese Laid-Open Patent Publication JP-A-10-271223 (1998) discloses a technique for mediating access to a web site on the Internet and acquisition of information from a web site by use of voice input.

In this prior art technique, a telephone/internet gateway processor carries out such processes as formation of a communication link, data format conversion, and protocol conversion in response to an input spoken instruction to enable access to a web site.

On the other hand, Japanese Laid-Open Patent Publication No. JP-A-2000-112610 discloses a prior art technique for speech recognition in which a plurality of recognition methods are handled including speech recognition and image recognition. This technique sends display contents to a recognition apparatus determined based on the "category" entry, which indicates the type of a target recognition apparatus, included in the text description in the display contents.

WO-A-0 005 643 discloses a voice browser operating with application dependent vocabularies for the speech recogniser.

### Summary of the Invention

The above prior art technique described in Japanese Laid-Open Patent Publication No. JP-A-10-271223 (1998) uses only the telephone/internet gateway processor 44 to process all voice inputs from a plurality of users. However, each speech recognition engine has its own specific field(s) to which it can be suitably applied. Their recognition speed or accuracy considerably varies depending on the contents (field) of what is spoken. For example, a speech recognition engine for the field of patents recognizes a speech (voice) concerning patents at high speed with high accuracy. However, the same speech recognition engine may recognize a speech (voice) on foods only at low speed with reduced accuracy.

This means that the conventional technique, which uses only a single apparatus to recognize speeches (voices) on a plurality of topics, cannot efficiently perform speech recognition and subsequent service provision based on the speech recognition results on a network connected to the Internet to which speeches (voices) on various topics requesting various services are input.

Incidentally, a service requesting apparatus mounted on a vehicle preferably uses voice inputs for requesting a service. This is because use of voice inputs enables even a driver to enter an instruction. On the other hand, it is highly likely that a request sent from a running vehicle must be quickly processed since the position of the user (vehicle) changes every moment. For example, consider a case in which the user has sent an instruction saying, "search for a nearby restaurant". If it takes a few hours to complete the search, the found restaurant may be located far from the current vehicle position at which the search result has been received even though it is near the position from which the instruction was sent, causing a problem that the system cannot provide appropriate information. Thus, using the same recognition engine for processing all types of requests is highly likely to raise a problem as described above.

In the above technique disclosed in Japanese Laid-Open Patent Publication No. JP-A-2000-112610, voice contents and image data can be separately transmitted to a speech recognition apparatus and a gesture recognition apparatus, respectively. However, the technique is not designed to select a speech recognition engine based on the contents of each piece of voice information. Each type of speech recognition engine differs from one another in the types of voice information that they can easily recognize (types of voice information recognized at high speed with high accuracy) and in the types of voice information that they can hardly recognize (types of voice information recognized at low speed with reduced accuracy), depending on the contents of their dictionaries. Since the above conventional technique uses only a first recognition apparatus (speech recognition) 14A to recognize all voice contents, it is not possible to change recognition apparatuses according to voice contents. Thus, it is necessary to use the first recognition apparatus even for voice contents hardly recognizable by the apparatus. That is, only the same speech recognition engine (recognition apparatus) is used for every request as in the case of the prior art technique disclosed in Japanese Laid-Open Patent Publication No. JP-A-10-271223 (1998). Furthermore, the above conventional technique disclosed in Japanese Laid-Open Patent Publication No. JP-A-2000-112610 does not consider use of speech recognition results for providing/receiving service. Accordingly, the above conventional technique uses the "category" entry included as a text description to specify a target recognition apparatus instead, and does not consider matching of each type of voice information to be recognized with service contents to be provided. As a result, it is not possible to use a speech recognition engine suitable for a service requested by each piece of voice information.

To solve the above problem, the present invention provides a system in which speech recognition is carried out by a speech recognition engine on a network selected according to each service requested by the user or according to voice input. To this goal there are provided : a service providing system as in claim 1, a service mediating apparatus as in claim 6 and a service mediating apparatus as in claim 10. Furthermore, the present invention includes a service mediating apparatus for controlling the system so that the system operates as described above (mediating provision of each service).

In one aspect of the present invention, to specify a speech recognition engine according to each service or according to voice input, the link-target apparatus corresponding to each service requested by the user may store information indicating its corresponding speech recognition engine beforehand.

In order to process a request from a user to provide service, the present invention employs a plurality of computers on a network, each executing its assigned function so as to collectively perform a series of speech recognition operations.

It should be noted that in addition to voice, the types of data entered by the user may include such data as image, whose data format is not used for providing service.

It should be further noted that VXML (Voice eXtended Markup Language) may be used to indicate the corresponding relationship between each speech recognition engine and each service or each service providing apparatus.

### Brief Description of the Drawings

Fig. 1 is a diagram showing the entire configuration of a service mediation system according to an embodiment of the present invention;

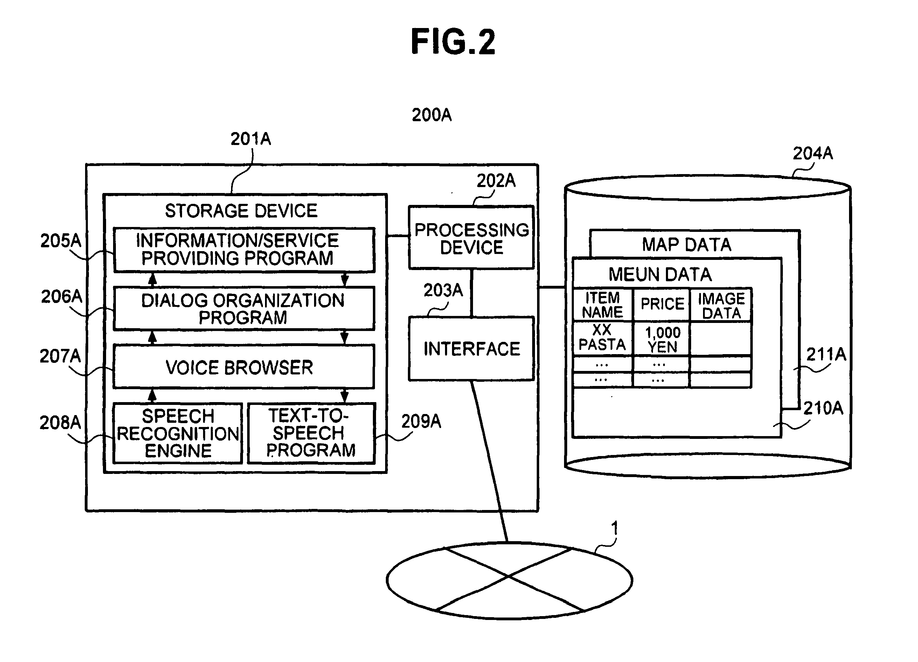

Fig. 2 is a diagram showing the configuration of a service providing apparatus 200A according to the embodiment;

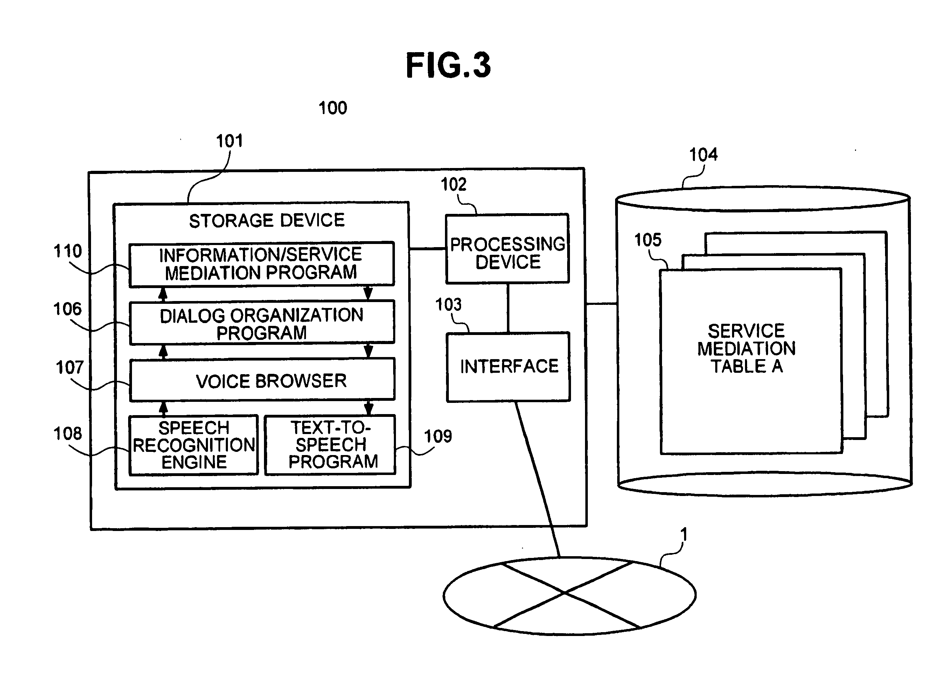

Fig. 3 is a diagram showing the configuration of a service mediating apparatus 100 according to the embodiment;

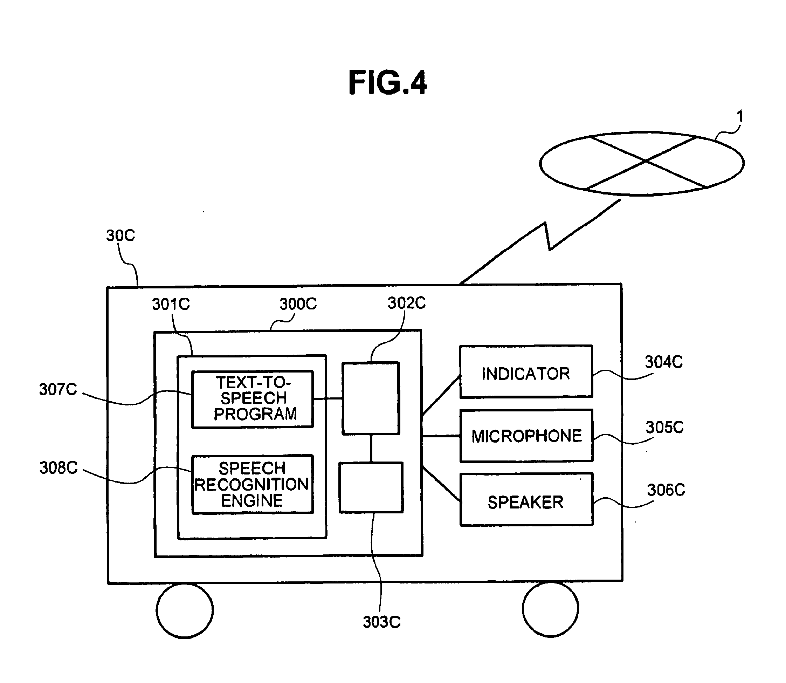

Fig. 4 is a diagram showing the configurations of a vehicle 30C and a service requesting apparatus 300C mounted on the vehicle 30C according to the embodiment;
Fig. 5 is a flowchart showing a process flow of the service mediation system according to the embodiment;
Fig. 6 is a flowchart showing process examples at steps 505 and 506 in Fig. 5;
Fig. 7 is a diagram describing the corresponding relationship between each link-target service providing apparatus and each speech recognition engine by use of the VXML description language;
Fig. 8 is a table showing communication protocols employed between the apparatuses;
Fig. 9 is a diagram showing the configuration of a system employing the communication protocols shown in Fig. 8;
Fig. 10 is a diagram showing a table used by the service mediating apparatus 100 to perform service mediation processing;
Fig. 11 is a diagram also describing the corresponding relationship between each link-target service providing apparatus and each speech recognition engine by use of the VXML description language;

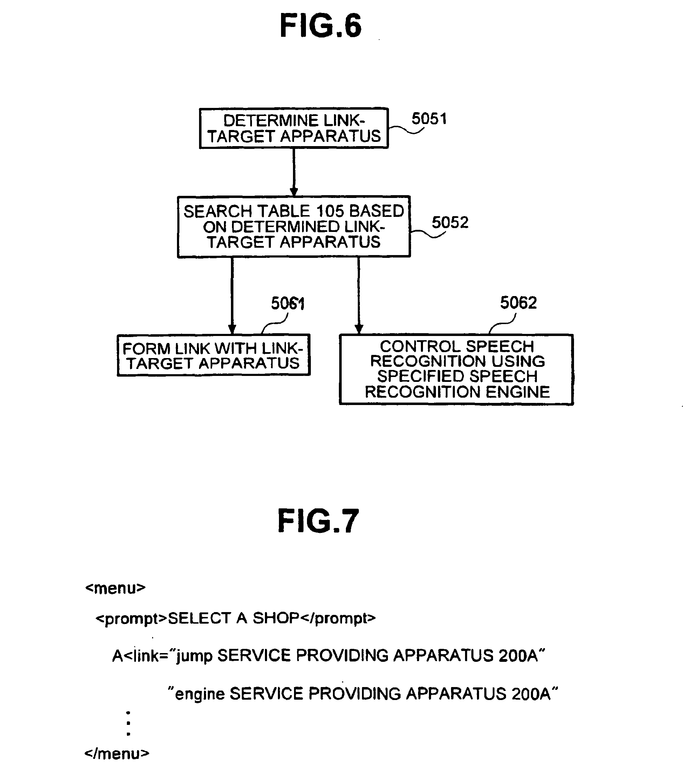

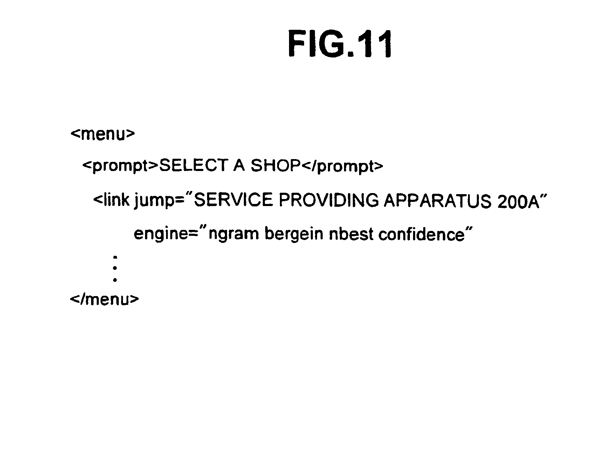

Fig. 11 is different from Fig. 7 in that Fig. 11 specifies each speech recognition engine by giving several conditions to be satisfied by the engine instead of directly specifying it; and

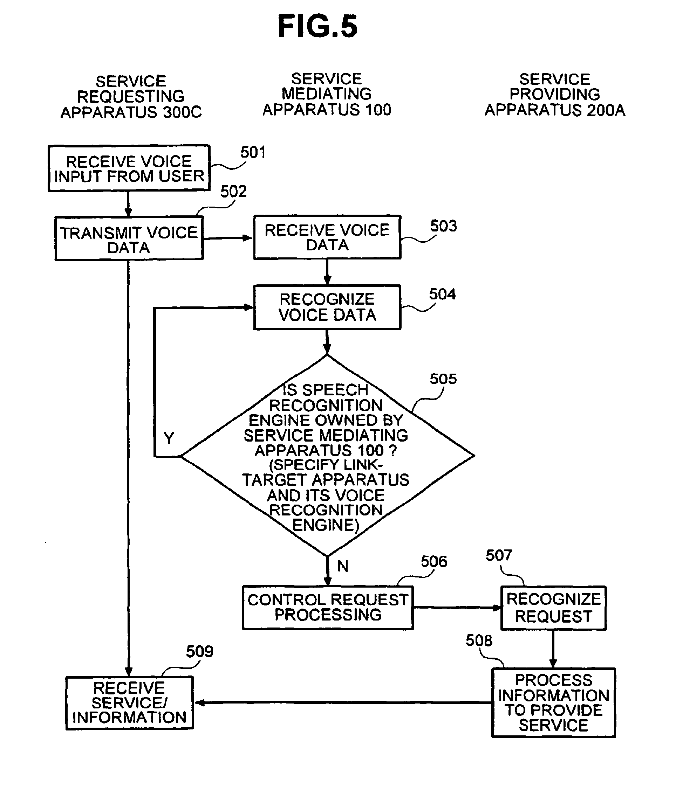

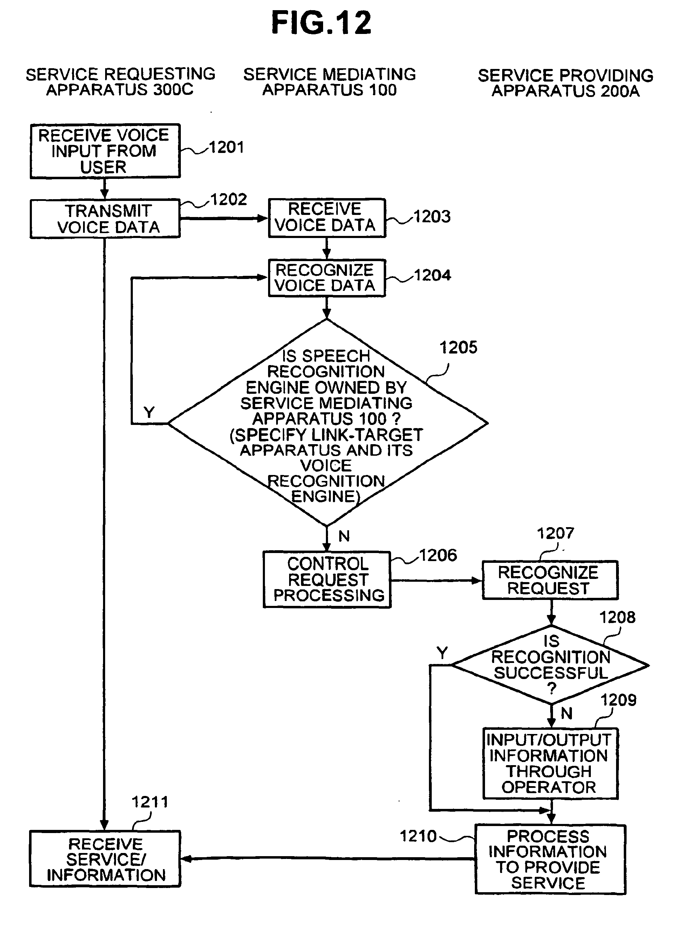

Fig. 12 is a flowchart showing another process flow of the service mediation system according to the embodiment. In addition to the steps in Fig. 5, the process flow of Fig. 12 includes a few particular steps in which an operator is involved.

### Description of the Preferred Embodiments

An embodiment of the present invention will be described below with reference to accompanying drawings.

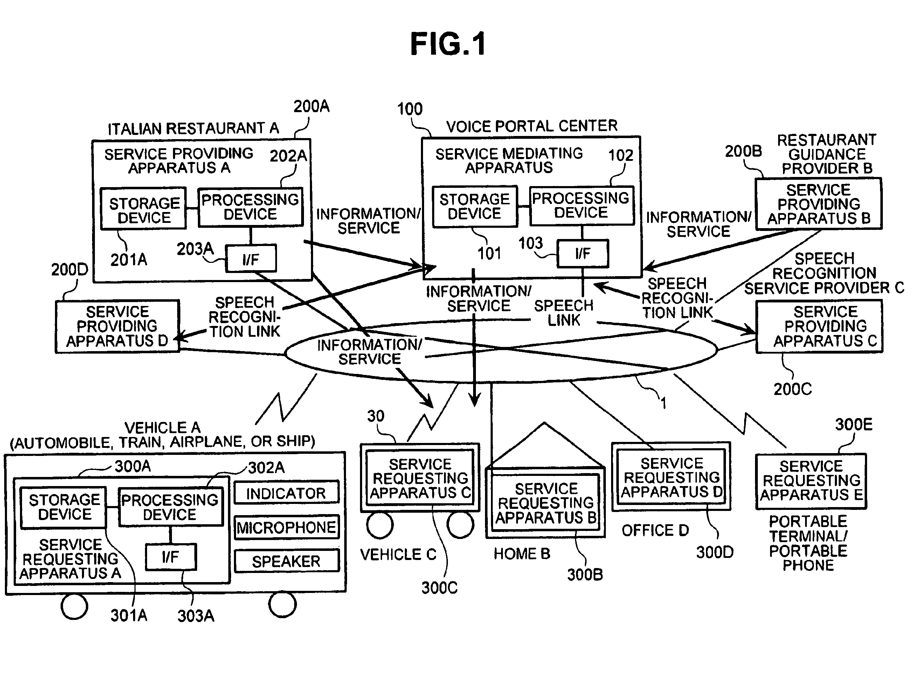

Fig. 1 is a diagram showing the entire configuration of a service mediation system according to the present invention. The system comprises a service mediating apparatus 100, a plurality of service providing apparatuses 200A through 200D, and a plurality of service requesting apparatuses 300A through 300E connected to one another through a network 1. The service requesting apparatuses 300A through 300E each receive a voice input from a user, and the service mediating apparatus 100 relays the request specified by the voice input to one of the service providing apparatuses 200A through 200D corresponding to the requested service. With this arrangement, the user can receive the service (including information) from the one of the service providing apparatuses 200A through 200D.

The above process will be further described in detail below by using an example in which the service providing apparatus 200A is managed by a restaurant A, and the service requesting apparatus 300A is a car navigation apparatus, wherein a search for a restaurant has been requested. The other service providing apparatuses 200B through 200D include computers managed by a movie theater and other amusement facilities. The service providing apparatuses 200A through 200D offer such services as information service on menus, service hours, movies currently available, etc., reservation service, and sales of tickets. Further, the other service requesting apparatuses 300B through 300E include an apparatus mounted on a vehicle, portable phones, and information processing devices such as personal computers, as shown in the figure (the service requesting apparatus 300A is a car navigation apparatus mounted on a vehicle as described above).

Description will be made of the process flow of the service mediation system with reference to the flowchart of Fig. 5. The following description assumes that the service requesting apparatus 300C is to request a service.

The service requesting apparatus 300C receives a voice input from a user through a microphone 304 in a vehicle 30 at step 501. The user is assumed to have given a request message saying that the user wanted to know a nearby restaurant.

The service requesting apparatus 300C transmits the received voice data to the service mediating apparatus in the voice portal center through the network 1 using an interface 303 according to a program stored in a storage device 301, at step 502. It should be noted that the data transmitted may be the received voice data itself, or both the received voice data and its speech recognition results (whose data format is transformed from that of the received voice data). Further, the types of voice data to be recognized include input voice data itself and data obtained by converting the format of the input voice data (for example, coding the input voice data) so that it is suitable for speech recognition.

When the service requesting apparatus has at least both a voice browser and a dialog organization program (function) as do the service providing apparatuses 200A and 200B, the service requesting apparatus itself may respond to a user request. In the following description of the present embodiment, however, the service mediating apparatus 100 responds to the user request. A user request is responded here by performing processes such as helping narrow down the search according to a program stored in the service requesting apparatus. For example, recognizing the above request message saying, "I want to know a nearby restaurant", the service requesting apparatus responds to the request by giving the user the question "which type of restaurant, Japanese, Chinese, French, or Italian ?" to promote a further data input from the user according to a dialog organization program in order to help process the search request. The question may be given from a speaker 305 according to a text-to-speech program, or indicated on an indicator 306. This process of giving a question to narrow down the search is repeated until the service requesting apparatus cannot process (recognize) a further input or request. The service requesting apparatus then connects with the service mediating apparatus so that the service mediating apparatus can process subsequent inputs or requests (by giving further questions). This connection with the service mediating apparatus can be realized by setting the "link-target apparatus for further request processing" entry stored in the service requesting apparatus and used when the service requesting apparatus cannot process (recognize) an input or request so that the "link-target apparatus for further request processing" entry indicates the service mediating apparatus.

Furthermore, the process of recognizing the inputs may be carried out by the service requesting apparatus and either the service mediating apparatus or the service providing apparatus. In this case, if the service requesting apparatus cannot recognize an input, the service mediating apparatus or the service providing apparatus will recognize it in place of the service requesting apparatus so as to continue the process of recognizing (responding to) the inputs.

It should be noted that the above state of being unable to process (respond to) an input also occurs when the service requesting apparatus has received a request requesting for data which the service requesting apparatus does not have (for example, when the service requesting apparatus has received a question such as "which web site was most popular this week?"). The above state still also occurs when the service requesting apparatus has received a request which the service requesting apparatus cannot recognize because it does not have necessary data (such as words and grammars) for recognizing it.

The types of requests which the service requesting apparatus can process by itself include command execution requests for operating the service requesting apparatus itself and equipment therearound. In the case of a service requesting apparatus in a vehicle, equipment around the service requesting apparatus include equipment mounted on the vehicle, such as an air-conditioner, a wiper, and a radio.

The service requesting apparatuses 300A through 300E may be of types not mountable on vehicles. If the service requesting apparatuses 300A through 300E are mounted on vehicles, they are preferably connected to the network 1 by radio links.

At step 503, using an interface 103, the service mediating apparatus 100 receives voice data saying, "I want to know a nearby restaurant", transmitted through the network.

The service mediating apparatus 100 recognizes the received voice data using a processing device 102 and a speech recognition program or another type of recognition program at step 504. Since the message (voice data) includes the word "nearby", the service mediating apparatus 100 performs the process of obtaining the position of the running vehicle 30C. Specifically, for example, the service mediating apparatus 100 performs the following. (1) If the service requesting apparatus 300C is a car navigation system, the service mediating apparatus 100 obtains information on the position of the running vehicle stored in the car navigation system. Or alternatively, (2) the service mediating apparatus 100 requests the user to enter the current position of the vehicle into the service requesting apparatus 300C using a dialog organization program. To be more specific in the case of (2), the service mediating apparatus 100 gives the message "please enter the current position" by voice from a speaker 305 or by an indication on an indicator 306. Whether any restaurant is "near" the vehicle 30C may be determined by checking whether it is located within a predetermined distance from the vehicle 30C. At that time, location information on restaurants stored in a table is used.

On the other hand, a table stored in a storage device 104 is used to search for a restaurant of a desired type. If the category "restaurant" includes a plurality of subcategories, the dialog organization program is set so as to give the user a question such as "which type of restaurant, Japanese, Chinese, French, or Italian ?" to promote a further data input from the user. Furthermore, if a plurality of restaurants are registered in a subcategory, the name of each restaurant may be output to the service requesting apparatus 300C one after another. Alternatively, the user may be requested to enter a condition(s) to specify a restaurant of the desired type. For example, the service mediating apparatus 100 stores each restaurant's conditions (price, service hours, taste, availability of parking and its capacity, etc.) beforehand, and promotes the user to enter a condition(s) to be compared with these stored conditions.

At step 505, based on the recognition results of the above input data, the service mediating apparatus 100 determines a speech recognition engine for recognizing voice data sent from the service requesting apparatus 300C.

A specific example of step 505 will be described with reference to Fig. 6. Steps 5051 and 5052 in Fig. 6 correspond to step 505.

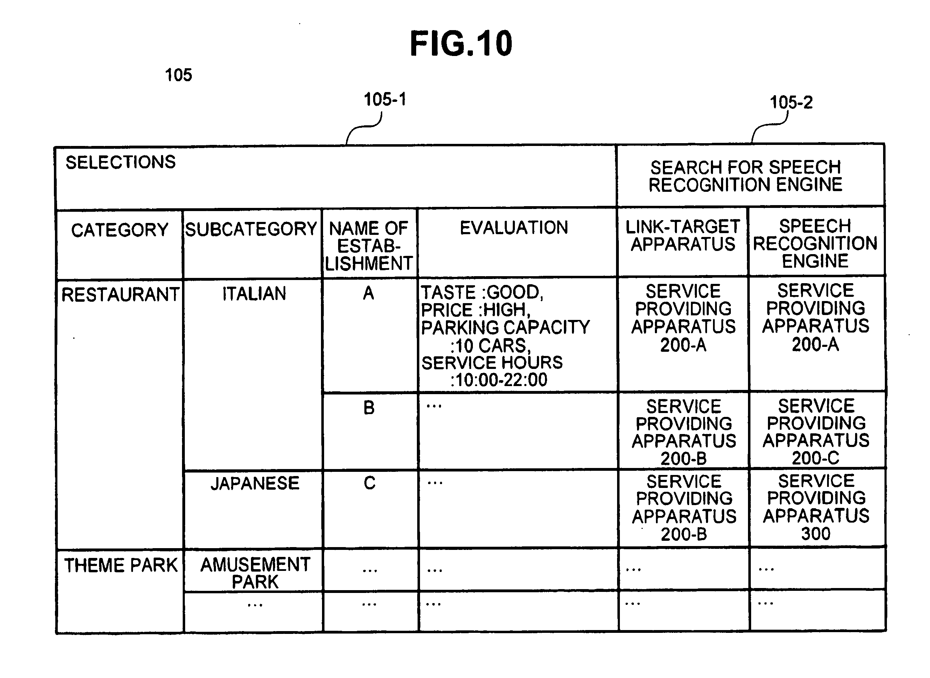

At step 5051, the processing device 102 in the service mediating apparatus 100 searches for a link-target service providing apparatus which is to provide the service requested by the voice data. This search is carried out using a table 105 shown in Fig. 10. That is, the processing device 102 refers to each selection item in the table in search of a matching restaurant. If the category "Italian" is selected in the above inquiry about a desired type of restaurant, restaurants A through D are obtained as a result of the search. The processing device 102 in the service mediating apparatus 100 then inquires about the user's favorite flavoring, price range, desired restaurant location, etc. to specify a restaurant meeting the user's request, and a corresponding service providing apparatus. In this example, it is assumed that the restaurant A has been selected. The service mediating apparatus 100 then specifies a link-target apparatus (e.g., a service providing apparatus) corresponding to the restaurant A using the table. It should be noted that a plurality of restaurants and a plurality of link-target apparatuses may be selected.

By using the table, step 5052 specifies a speech recognition engine corresponding to the specified link-target apparatus. It is also possible to specify the speech recognition engine using its address used to connect with it. A plurality of speech recognition engines, instead of one, may be associated with a link-target apparatus in the table as candidates for a target speech recognition engine. With this arrangement, the candidate speech recognition engines may be narrowed down to one by considering the user's requests concerning such items as charge for using a speech recognition engine and its translation accuracy. The above table may be held by another information processing device on the network.

The speech recognition engine may also be specified using a list written in the VXML description language shown in Fig. 7 instead of a general table.

Furthermore, a list written in a specific format shown in Fig. 11 may be used instead of the list written in the VXML description language in Fig. 7. This format specifies each target speech recognition engine using parameters such as "ngram", "bergein", "nbest", and "confidence", each indicating a specific condition. The parameter "ngram" indicates that a series of words should be recognized; "bergein" indicates that the user can interrupt a text-to-speech process; "nbest" instructs that a plurality of speech recognition result candidates be output; and "confidence" indicates that the degree of reliability of the speech recognition results should be output. That is, Fig. 11 gives conditions to indicate a speech recognition engine capable of recognizing a series of words, accepting an interruption during its voice synthesizing process, outputting a plurality of speech recognition result candidates, and outputting the reliability degree of its speech recognition results.

When specifying a target speech recognition engine using the format shown in Fig. 11, it is possible to select one from either a list of speech recognition engines owned by the link-target service providing apparatus or a list of speech recognition engines owned by a service providing apparatus currently used by the system.

On the other hand, a plurality of speech recognition engines may be selected instead of specifying one so as to recognize the same voice using each of the selected plurality of speech recognition engines. In this case, it is possible to adopt a recognition result obtained fastest (that is, the one obtained from a speech recognition engine having the fastest response characteristic) so as to increase the response speed, or alternatively, it is possible to select the most accurate recognition result from among a plurality of obtained recognition results so as to increase the recognition accuracy.

In this example, the service providing apparatus 200A and a speech recognition engine owned by the apparatus are selected.

After specifying a link-target apparatus and a speech recognition engine, the service mediating apparatus 100 controls the system so that the specified link-target apparatus and speech recognition engine can perform a predetermined process, at step 506.

A specific example of step 506 will be described with reference to Fig. 6. Steps 5061 and 5062 in Fig. 6 correspond to step 506.

Step 5061 changes the linked apparatus (or establishes a link). For example, the service mediating apparatus 100 establishes a connection between the service requesting apparatus 300C and the link-target service providing apparatus A so that the service providing apparatus A can receive voice data from a user.

Step 5062 controls the system so that a speech recognition engine specified at step 5052 can recognize voice data. At that time, the system is so set that the voice data is transmitted from the service requesting apparatus 300C to the speech recognition engine owned by the service providing apparatus 200A.

It should be noted that a speech recognition engine to be used need not necessarily be one owned by a service providing apparatus which provides a required service. For example, the service providing apparatus 200D can provide speech recognition service, and therefore can be used as a speech recognition engine for another service providing apparatus. Furthermore, a service providing apparatus dedicated for speech recognition can also be used to recognize the voice data. A table used for specifying a target speech recognition engine need not necessarily specify a speech recognition engine for each service providing apparatus. For example, a plurality of speech recognition engines and their priorities may be registered in the table. And if a specified service providing apparatus has a speech recognition engine, that speech recognition engine is used. Otherwise, a speech recognition engine in a field related to the service to be provided by the specified service providing apparatus is searched for on the network using the table. If no suitable speech recognition engine is found in the search, it may be arranged such that a speech recognition engine owned by the service mediating apparatus 100 is used.

At step 507, the speech recognition engine owned by the service providing apparatus 200A recognizes a request (voice data) from the service requesting apparatus 300C. At step 508, the service providing apparatus 200A performs information processing for providing a service requested by the user based on the recognition results of the voice data. For example, if the user has entered the request message "I want to see a menu", the service providing apparatus 200A outputs menu data held by the apparatus to the service requesting apparatus 300C through the network 1 based on the recognition results by the speech recognition engine, at step 508. The service requesting apparatus 300C then outputs the menu onto the screen of the indicator 304C and/or reads out the menu from the speaker 306C.

A speech recognition engine owned by an apparatus other than a specified service providing apparatus may be used to recognize voice data as described above. It should be noted that reception of service and information at step 509 may be carried out through the service mediating apparatus 100.

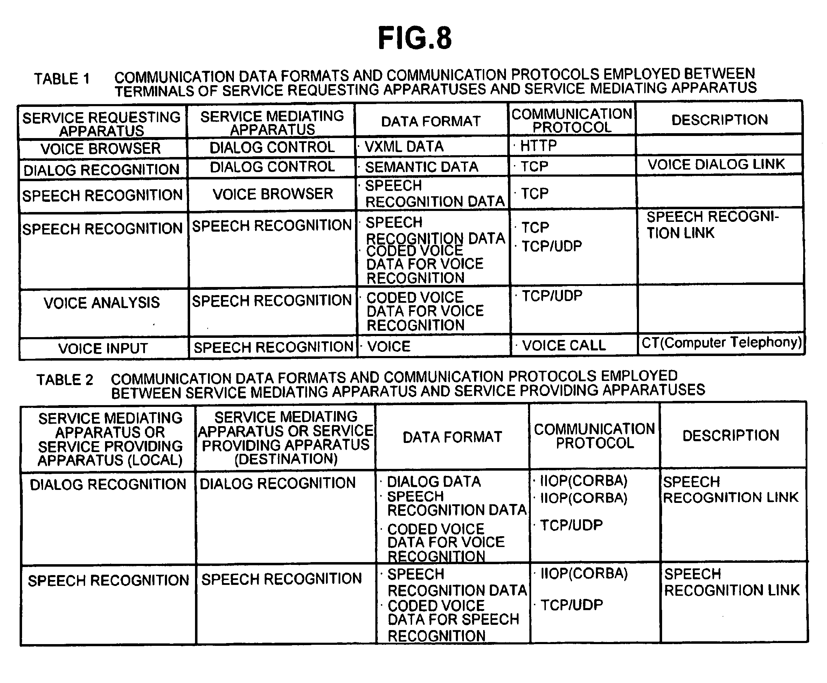

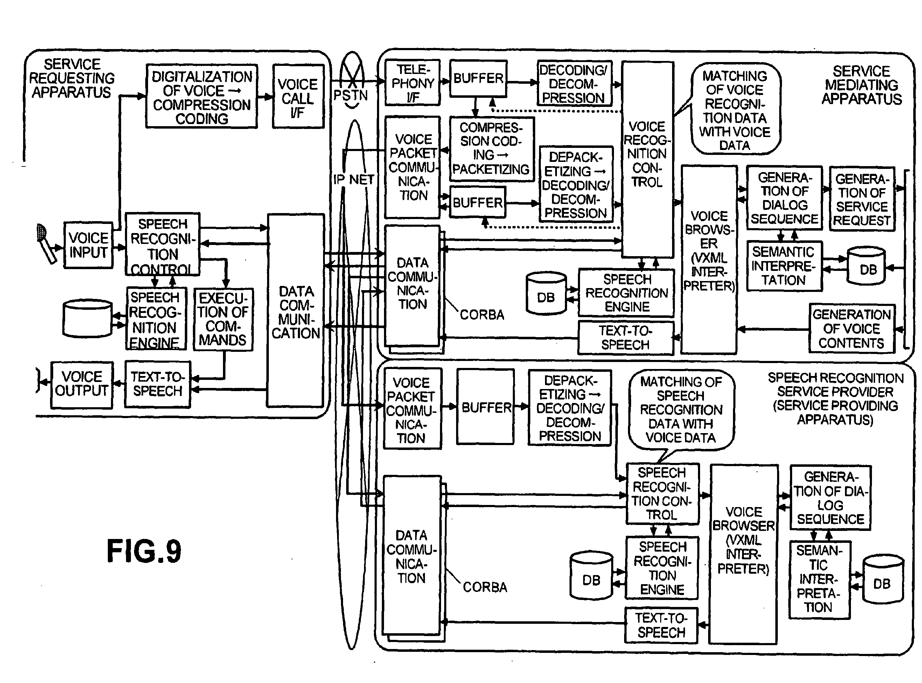

Fig. 8 shows an example of communication protocols used between the apparatuses according to the present embodiment. Fig. 9 shows a configuration of a system using the communication protocols in Fig. 8. It should be noted that data formats used between communicating apparatuses may be different depending on each communicating apparatus. Specifically, a data format meeting the function of each transmission destination apparatus may be used. For example, the service requesting apparatus 300A may use a text format while the service requesting apparatus 300E may use voice data itself.

The service requesting apparatus of the present embodiment includes only a text-to-speech program and a speech recognition engine. However, either a dialog organization program or a voice browser may be added to the service requesting apparatus to process a dialog with the user. On the other hand, the service requesting apparatus may have only a voice input/output function and include no program for processing dialogs. A voice analysis program may be added to the service requesting apparatus to analyze voice.

Further, one of the information/service providing program, the dialog organization program, and the voice browser can be omitted from the configuration of the service providing apparatus 200A. For example, at least one of them can be omitted from the service requesting apparatuses 200C and 200D, which provide speech recognition service. Furthermore, some service providing apparatuses do not require any speech recognition engine. For example, no speech recognition engine may be included in the service providing apparatus 200B, which provides restaurant information. In this case, the service providing apparatus 200B searches restaurant information using voice data recognized with a speech recognition engine specified by the service mediating apparatus 100, and provides information obtained as a result of the search.

The service requesting apparatuses 300A through 300C may use dictionaries in remote locations through the network 1 to recognize a voice. In such a case, the frequency of use of each dictionary may be stored so that dictionaries whose use is more frequent than a predetermined number of times may be downloaded or cached.

The present invention may be configured such that when a speech recognition operation fails, the system may automatically switch to a human operator for recognizing the voice. In Fig. 1, for example, the service providing apparatus 200A may include a human operator, and if its speech recognition engine fails to recognize a voice, the service providing apparatus 200A automatically switches to the operator to respond to the voice.

Fig. 12 is a flowchart showing the process of switching to an operator when a speech recognition operation fails. At step 1207, the service providing apparatus 200A starts to recognize a request. If the service providing apparatus 200A fails to recognize the request (branch N of step 1208), the apparatus connects the service requesting apparatus 300C to the operator so that the operator can request an input from the user through a dialog between the user and the operator at step 1209. After recognizing the request, the service providing apparatus 200A carries out processing necessary for providing service at step 1210, and sends the requested service/information to the service requesting apparatus 300C at step 1211.

Voice subjected to speech recognition may always be recorded for a predetermined period of time, and if a speech recognition operation fails, the recorded voice data and the speech recognition results obtained until then may be supplied to the operator. With this arrangement, the operator can listen to the previous dialogs and refer to the speech recognition results so as to quickly understand what has been requested or spoken without listening to the actual conversation between the user and the service providing apparatus all the time, making it possible to smoothly switch to the operator for responding to inputs.

It should be noted that even though the above description of the present embodiment assumes that the operator is included in the service providing apparatus, it may be the service mediating apparatus that includes the operator instead.

As described above, the present invention includes provision of various services in addition to restaurant search service, input of various types of input data, and various systems in which apparatuses of the present invention are installed. For example, the present invention includes image, text, etc. as input data in addition to voice. And as systems, the present invention includes computers in homes, mobile computers, and portable phones, in addition to vehicles having an apparatus of the present invention mounted thereon.

The present invention includes various modes for the service providing apparatus in addition to that of the service providing apparatus 200A, and each service providing apparatus carries out processing according to its function. For example, a service providing apparatus which does not have a speech recognition engine performs information processing for providing service using recognition results provided by a speech recognition engine of another apparatus. Similarly, the present invention also includes various modes for the service requesting apparatus in addition to that of the service requesting apparatus 300C, and each service requesting apparatus carries out processing according to its function. For example, the service requesting apparatus 300A performs speech recognition and processing of a dialog with the user within its functional capability.

The present invention makes it possible to quickly and accurately recognize service requests on a network. Accordingly, it is possible to efficiently provide a requested service.

## Claims

1. A service providing system comprising:
service providing apparatuses (200A, 200B, 200C, 200D) for processing information to provide service;
a service requesting apparatus (300A, 300E) for processing information to request said service from said service providing apparatuses; and
a service mediating apparatus (100) connected to said service providing apparatuses and said service requesting apparatus through a network;
wherein said service requesting apparatus (300A) is adapted to receive a voice input indicating an instruction as to a service requested by a user of the service requesting apparatus;
said service mediating apparatus (100) is adapted to specify a service providing apparatus (200A) which is to perform a process corresponding to said instruction;
based on said specified service providing apparatus, said service mediating apparatus (100) is adapted to specify an information processing apparatus (202A, 302A) which is to recognise a voice input from said user; and
said specified service providing apparatus (200A) is adapted to process information to provide a service based on speech recognition performed by said specified information processing apparatus.

2. The system of claim 1, wherein based on information indicating a corresponding relationship between said specified service providing apparatus and said information processing apparatus which is to recognise said voice, said service mediating apparatus is adapted to specify said information processing apparatus.

3. The system of claim 2, wherein said service mediating apparatus includes a storage device storing the information indicating the corresponding relationship between said specified service providing apparatus and said information processing apparatus which is to recognise said voice.

4. The system of claim 1, wherein said information processing apparatus which is to recognise said voice is connected to said network.

5. The system of claim 1, wherein said service requesting apparatus is an information processing apparatus adapted to be used in a moving vehicle.

6. A service mediating apparatus (100) connected through a network to service providing apparatuses (200A, 200B) for processing information to provide service, and to a service requesting apparatus (300A) for processing information to request said service from said service providing apparatuses, said service mediating apparatus (100) comprising:
means for receiving, through said network, a voice input indicating an instruction as to a service requested by a user of said service requesting apparatus, said voice input having been received by said service requesting apparatus (300A);
means for specifying a service providing apparatus (200A) which is to perform a process corresponding to said instruction; and
means for, based on said specified service providing apparatus (200A), specifying an information processing apparatus (202A) which is to recognise a voice input from said user,
and for thus allowing said specified service providing apparatus (200A) to process information to provide a service based on speech recognition performed by said specified information processing apparatus.

7. The apparatus of claim 6, wherein based on information indicating a corresponding relationship between said specified service providing apparatus and said information processing apparatus which is to recognise said voice, said means for specifying an information processing apparatus specifies said information processing apparatus.

8. The apparatus of claim 7, further comprising a storage device for storing the information indicating the corresponding relationship between said specified service providing apparatus and said information processing apparatus which is to recognise said voice.

9. The apparatus of claim 8, further comprising means for, through said network, connecting with said information processing apparatus which is to recognise said voice.

10. A service mediating apparatus (100) for processing information to mediate service, said service mediating apparatus comprising:
a receiving device for receiving user voice information indicating an instruction as to a service requested by a user of a service requesting apparatus (300A) ;
a storage device (101) storing a program for specifying a service corresponding to an instruction indicated by voice information and, based on said specified service, for specifying a speech recognition program for recognising said voice information;
a processing device (102) for, according to said program, specifying the service corresponding to the instruction indicated by said user voice information and, based on said specified service, specifying a speech recognition program which is to recognise said user voice information, said processing device (102) being connected to said receiving device and said storage device (101); and
an output device for outputting information for recognising said user voice information to an information processing apparatus (202A) which is to recognise a voice according to said specified speech recognition program.

11. The apparatus of claim 10, further comprising a second storage device for indicating a corresponding relationship between said service and said speech recognition program, wherein said processing device specifies said speech recognition program using said second storage device.

12. The apparatus of claim 10, wherein said service mediating apparatus is adapted to connect with said information processing apparatus having a speech recognition engine through a network.

13. The apparatus of claim 10, wherein said storage device holds a speech recognition program, and said processing device is adapted to recognise said user voice information using said speech recognition program held by said storage device.

14. The apparatus of claim 10, wherein said receiving device is adapted to be connected to a service requesting apparatus through a network to receive said user voice information from the service requesting apparatus through the network.

15. The system of claim 3 or the apparatus of any of claims 6 and 9, wherein said corresponding relationship is described by a VXML language, which is an extensible mark-up language.

16. The system of claim 15, wherein information described by said VXML language includes information specifying an execution condition for recognising a voice.

## Patentansprüche

1. Dienstleistungs-Bereitstellsystem mit
Dienstleistungs-Bereitstellvorrichtungen (200A, 200B, 200C, 200D) zum Verarbeiten von Informationen für die Bereitstellung einer Dienstleistung,
einer Dienstleistungs-Anfordervorrichtung (300A, 300E) zum Verarbeiten von Informationen für die Anforderung der Dienstleistung von den Dienstleistungs-Bereitstellvorrichtungen und
einer mit den Dienstleistungs-Bereitstellvorrichtungen und der Dienstleistungs-Anfordervorrichtung über ein Netzwerk verbundenen Dienstleistungs-Vermittlungsvorrichtung (100),
wobei die Dienstleistungs-Anfordervorrichtung (300A) zur Aufnahme einer Stimmeingabe ausgelegt ist, die eine Instruktion bezüglich einer von einem Benutzer der Dienstleistungs-Anfordereinrichtung angeforderten Dienstleistung angibt,
wobei die Dienstleistungs-Vermittlungsvorrichtung (100) so ausgelegt ist, daß sie eine Dienstleistungs-Bereitstellvorrichtung (200A) spezifiziert, die einen der Instruktion entsprechenden Prozeß ausführen soll,
wobei die Dienstleistungs-Vermittlungsvorrichtung (100) so ausgelegt ist, daß sie aufgrund der spezifizierten Dienstleistungs-Bereitstellvorrichtung eine Informationsverarbeitungsvorrichtung (202A, 302A) spezifiziert, die eine Stimmeingabe durch den Benutzer erkennen soll, und
wobei die spezifizierte Dienstleistungs-Bereitstellvorrichtung (200A) so ausgelegt ist, daß sie Informationen verarbeitet, um aufgrund einer von der spezifizierten Informationsverarbeitungsvorrichtung durchgeführten Spracherkennung eine Dienstleistung bereitstellt.

2. System nach Anspruch 1, wobei die Dienstleistungs-Vermittlungsvorrichtung so ausgelegt ist, daß sie die Informationsverarbeitungsvorrichtung aufgrund einer Information spezifiziert, die eine entsprechende Beziehung zwischen der spezifizierten Dienstleistungs-Bereitstellvorrichtung und der Informationsverarbeitungsvorrichtung, die die Stimme erkennen soll, angibt.

3. System nach Anspruch 2, wobei die Dienstleistung-Vermittlungsvorrichtung ein Speichergerät aufweist, das Informationen speichert, die die entsprechende Beziehung zwischen der spezifizierten Dienstleistungs-Bereitstellvorrichtung und der Informationsverarbeitungsvorrichtung, die die Stimme erkennen soll, angibt.

4. System nach Anspruch 1, wobei die Informationsverarbeitungsvorrichtung, die die Stimme erkennen soll, an das Netzwerk angeschlossen ist.

5. System nach Anspruch 1, wobei die Dienstleistungs-Anfordervorrichtung eine in einem sich bewegenden Fahrzeug benutzbare Informationsverarbeitungsvorrichtung ist.

6. Dienstleistungs-Vermittlungsvorrichtung (100), die über ein Netzwerk mit Dienstleistungs-Bereitstellvorrichtungen (200A, 200B) zum Verarbeiten von Informationen für die Bereitstellung einer Dienstleistung sowie mit einer Dienstleistungs-Anfordervorrichtung (300A) zum Verarbeiten von Informationen für die Anforderung der Dienstleistung von den Dienstleistungs-Bereitstellvorrichtungen verbunden ist und aufweist:
eine Einrichtung zum Empfang einer Stimmeingabe über das Netzwerk, wobei die Stimmeingabe eine Instruktion bezüglich einer von dem Benutzer der Dienstleistungs-Anfordervorrichtung angeforderten Dienstleistung angibt und durch die Dienstleistungs-Anfordervorrichtung (300A) empfangen worden ist,
eine Einrichtung zum Spezifizieren einer Dienstleistungs-Bereitstellvorrichtung (200A), die einen der Instruktion entsprechenden Prozeß ausführen soll, und
eine Einrichtung, die aufgrund der spezifizierten Dienstleistungs-Bereitstellvorrichtung (200A) eine Informationsverarbeitungsvorrichtung (202A) spezifiziert, die eine Stimmeingabe von dem Benutzer erkennen soll, und es **dadurch** gestattet, daß die spezifizierte Dienstleistungs-Bereitstellvorrichtung (200A) Informationen verarbeitet, um aufgrund einer von der spezifizierten Informationsverarbeitungsvorrichtung durchgeführten Spracherkennung eine Dienstleistung bereitzustellen.

7. Vorrichtung nach Anspruch 6, wobei die Einrichtung zum Spezifizieren einer Informationsverarbeitungsvorrichtung diese aufgrund von Informationen spezifiziert, die eine entsprechende Beziehung zwischen der spezifizierten Dienstleistung-Bereitstellvorrichtung und der Informationsverarbeitungsvorrichtung, die die Stimme erkennen soll, angeben.

8. Vorrichtung nach Anspruch 7 mit ferner einem Speichergerät zum Speichern der Informationen, die die entsprechende Beziehung zwischen der spezifizierten Dienstleistungs-Bereitstellvorrichtung und der Informationsverarbeitungsvorrichtung, die die Stimme erkennen soll, angeben.

9. Vorrichtung nach Anspruch 8 mit ferner einer Einrichtung zum Verbinden mit der Informationsverarbeitungsvorrichtung, die die Stimme erkennen soll, über das Netzwerk.

10. Dienstleistungs-Vermittlungsvorrichtung (100) zur Verarbeitung von Informationen für die Vermittlung einer Dienstleistung, wobei die Dienstleistungs-Vermittlungsvorrichtung aufweist:
ein Empfangsgerät zum Empfangen von Benutzer-Stimminformationen, die eine Instruktion bezüglich einer von einem Benutzer einer Dienstleistungs-Anfordervorrichtung (300A) angeforderten Dienstleistung angeben,
ein Speichergerät (101) zum Speichern eines Programms zum Spezifizieren einer Dienstleistung entsprechend einer von den Stimminformationen angegebenen Instruktion sowie zum Spezifizieren eines Spracherkennungsprogramms für die Erkennung der Stimminformation aufgrund der spezifizierten Dienstleistung,
ein Verarbeitungsgerät (102) zum Spezifizieren der Dienstleistung entsprechend dem Programm, wobei die Dienstleistung der von den Benutzer-Stimminformationen angegebenen Instruktion entspricht, sowie zum Spezifizieren eines Spracherkennungsprogramms, das die Benutzer-Stimminformationen erkennen soll, aufgrund der spezifizierten Dienstleistung, und wobei das Verarbeitungsgerät (102) mit dem Empfangsgerät und dem Speichergerät (101) verbunden ist, und
ein Ausgabegerät zur Ausgabe von Informationen für die Erkennung der Sprachinformationen an eine Informationsverarbeitungsvorrichtung (202A), die entsprechend dem spezifizierten Spracherkennungsprogramm eine Stimme erkennen soll.

11. Vorrichtung nach Anspruch 10 mit ferner einem zweiten Speichergerät zur Angabe einer entsprechenden Beziehung zwischen der Dienstleistung und dem Spracherkennungsprogramm, wobei das Verarbeitungsgerät das Spracherkennungsprogramm unter Verwendung des zweiten Speichergeräts spezifiziert.

12. Vorrichtung nach Anspruch 10, wobei die Dienstleistungs-Vermittlungsvorrichtung so ausgelegt ist, dass sie die eine Spracherkennungsmaschine aufweisende Informationsverarbeitungsvorrichtung über ein Netzwerk verbindet.

13. Vorrichtung nach Anspruch 10, wobei das Speichergerät ein Spracherkennungsprogramm speichert und das Verarbeitungsgerät so ausgelegt ist, dass es die Benutzer-Stimminformationen unter Verwendung des in dem Speichergerät gespeicherten Spracherkennungsprogramms erkennt.

14. Vorrichtung nach Anspruch 10, wobei das Empfangsgerät zur Verbindung mit einer Dienstleistungs-Anfordervorrichtung über ein Netzwerk ausgelegt ist, um die Benutzer-Stimminformationen von der Dienstleistungs-Anfordervorrichtung über das Netzwerk zu empfangen.

15. System nach Anspruch 3 bzw. Vorrichtung nach Anspruch 6 oder 9, wobei die entsprechende Beziehung in einer VXML-Sprache, d.h. einer erweiterbaren Mark-up-Sprache, beschrieben ist.

16. System nach Anspruch 15, wobei die in der VXML-Sprache beschriebenen Informationen Informationen enthalten, die eine Ausführbedingung zum Erkennen von Stimme spezifizieren.

## Revendications

1. Système de fourniture de service comportant :
des dispositifs de fourniture de service (200a, 200b, 200c, 200d) pour traiter des informations afin de fournir un service,
un dispositif de demande de service (300a, 300e) pour traiter des informations afin de demander ledit service depuis lesdits dispositifs de fourniture de service, et
un dispositif médiateur de service (100) connecté auxdits dispositifs de fourniture de service et audit dispositif de demande de service via un réseau,
dans lequel ledit dispositif de demande de service (300a) est adapté pour recevoir une entrée vocale indiquant une instruction concernant un service demandé par un utilisateur du dispositif de demande de service,
ledit dispositif médiateur de service (100) est adapté pour spécifier un dispositif de fourniture de service (200a) lequel doit exécuter un processus correspondant à ladite instruction,
sur la base dudit dispositif de fourniture de service spécifié, ledit dispositif médiateur de service (100) est adapté pour spécifier un dispositif de traitement d'informations (202a, 302a) lequel doit reconnaître une entrée vocale en provenance dudit utilisateur, et
ledit dispositif de fourniture de service spécifié (200a) est adapté pour traiter des informations afin de délivrer un service basé sur la reconnaissance vocale exécutée par ledit dispositif de traitement d'informations spécifié.

2. Système selon la revendication 1, dans lequel sur la base des informations indiquant une relation de correspondance entre ledit dispositif de fourniture de service spécifié et ledit dispositif de traitement d'informations lequel doit reconnaître ladite voix, ledit dispositif médiateur de service est adapté pour spécifier ledit dispositif de traitement d'informations.

3. Système selon la revendication 2, dans lequel ledit dispositif médiateur de service inclut un dispositif de mémorisation mémorisant les informations indiquant la relation de correspondance entre ledit dispositif de fourniture de service spécifié et ledit dispositif de traitement d'informations lequel doit reconnaître ladite voix.

4. Système selon la revendication 1, dans lequel ledit dispositif de traitement d'informations qui doit reconnaître ladite voix est connecté audit réseau.

5. Système selon la revendication 1, dans lequel ledit dispositif de demande de service est un dispositif de traitement d'informations adapté à une utilisation dans un véhicule mobile.

6. Dispositif médiateur de service (100) connecté via un réseau à des dispositifs de fourniture de service (200a, 200b) pour traiter des informations afin de fournir un service, et à un dispositif de demande de service (300A) pour traiter des informations afin de demander ledit service depuis lesdits dispositifs de fourniture de service, ledit dispositif médiateur de service (100) comportant :
des moyens pour recevoir, via ledit réseau, une entrée vocale indiquant une instruction concernant un service demandé par un utilisateur dudit dispositif de demande de service, ladite entrée vocale ayant été reçue par ledit dispositif de demande de service (300A),
des moyens pour spécifier un dispositif de fourniture de service (200a) lequel doit exécuter un processus correspondant à ladite instruction, et
des moyens pour, sur la base dudit dispositif de fourniture de service spécifié (200A), spécifier un dispositif de traitement d'informations (200A) lequel doit reconnaître une entrée vocale en provenance dudit utilisateur,
et pour ainsi permettre audit dispositif de fourniture de service spécifié (200A) de traiter des informations afin de fournir un service sur la base de la reconnaissance vocale exécutée par ledit dispositif de traitement d'informations spécifié.

7. Dispositif selon la revendication 6, dans lequel sur la base des informations indiquant une relation de correspondance entre ledit dispositif de fourniture de service spécifié et ledit dispositif de traitement d'informations lequel doit reconnaître ladite voix, lesdits moyens pour spécifier un dispositif de traitement d'informations spécifient ledit dispositif de traitement d'informations.

8. Dispositif selon la revendication 7, comportant en outre un dispositif de mémorisation pour mémoriser les informations indiquant la relation de correspondance entre ledit dispositif de fourniture de service spécifié et ledit dispositif de traitement d'informations lequel doit reconnaître ladite voix.

9. Dispositif selon la revendication 8, comportant en outre des moyens pour, via ledit réseau, réaliser une connexion audit dispositif de traitement d'informations lequel doit reconnaître ladite voix.

10. Dispositif médiateur de service (100) pour traiter des informations afin de jouer le rôle de médiateur de service, ledit dispositif médiateur de service comportant :
un dispositif de réception pour recevoir des informations vocales utilisateur indiquant une instruction concernant un service demandé par un utilisateur d'un dispositif de demande de service (300A),
un dispositif de mémorisation (101) mémorisant un programme pour spécifier un service correspondant à une instruction indiquée par des informations vocales et, sur la base dudit service spécifié, pour spécifier un programme de reconnaissance vocale afin de reconnaître lesdites informations vocales,
un dispositif de traitement (102) pour, conformément audit programme, spécifier le service correspondant à l'instruction indiquée par lesdites informations vocales utilisateur et, sur la base dudit service spécifié, spécifier un programme de reconnaissance vocale lequel doit reconnaître lesdites informations vocales utilisateur, ledit dispositif de traitement (102) étant connecté audit dispositif de réception et audit dispositif de mémorisation (101), et
un dispositif de sortie pour délivrer en sortie des informations, afin de reconnaître lesdites informations vocales utilisateur, à un dispositif de traitement d'informations (202a) lequel doit reconnaître une voix conformément audit programme de reconnaissance vocale spécifié.

11. Dispositif selon la revendication 10, comportant en outre un second dispositif de mémorisation pour indiquer une relation de correspondance entre ledit service et ledit programme de reconnaissance vocale, dans lequel ledit dispositif de traitement spécifie ledit programme de reconnaissance vocale en utilisant ledit second dispositif de mémorisation.

12. Dispositif selon la revendication 10, dans lequel ledit dispositif médiateur de service est adapté à réaliser une connexion audit dispositif de traitement d'informations ayant un moteur de reconnaissance vocale via un réseau.

13. Dispositif selon la revendication 10, dans lequel ledit dispositif de mémorisation contient un programme de reconnaissance vocale, et ledit dispositif de traitement est adapté pour reconnaître lesdites informations vocales utilisateur en utilisant ledit programme de reconnaissance vocale conservé par ledit dispositif de mémorisation.

14. Dispositif selon la revendication 10, dans lequel ledit dispositif de réception est adapté pour être connecté à un dispositif de demande de service via un réseau afin de recevoir lesdites informations vocales utilisateur en provenance du dispositif de demande de service via le réseau.

15. Système selon la revendication 3 ou dispositif selon l'une quelconque des revendications 6 et 9, dans lequel ladite relation de correspondance est décrite par un langage VXML, lequel est un langage de balisage extensible.

16. Système selon la revendication 15, dans lequel des informations décrites par ledit langage VXML incluent des informations spécifiant une condition d'exécution pour reconnaître une voix.
